# EUROPÄISCHE PATENTSCHRIFT

(11) **EP 2 315 877 B1**
(45) Veröffentlichungstag und Bekanntmachung des Hinweises auf die Patenterteilung: **15.02.2012**
(21) Anmeldenummer: 09777061.4
(22) Anmeldetag: 09.07.2009
(51) Int. Cl.: E01B 29/46, B23K 11/00

(54) **SCHWEISSAGGREGAT ZUM VERSCHWEISSEN VON SCHIENEN EINES GLEISES**
WELDING UNIT FOR WELDING RAILS OF A TRACK
UNITÉ DE SOUDAGE DESTINÉE À SOUDER LES RAILS D'UNE VOIE

(30) Priorität: 04.08.2008 AT 12072008
(43) Veröffentlichungstag der Anmeldung: 04.05.2011
(73) Patentinhaber: Franz Plasser Bahnbaumaschinen-Industriegesellschaft m.b.H., 1010 Wien (AT)
(72) Erfinder: THEURER, Josef, A-1010 Wien (AT); LICHTBERGER, Bernhard, A-4230 Pregarten (AT); MÜHLLEITNER, Heinz, A-3100 St. Pölten (AT)
(86) Internationale Anmeldenummer: PCT/EP2009/004972
(87) Internationale Veröffentlichungsnummer: WO 2010/015309

(56) Entgegenhaltungen:
- US-A- 1 433 600
- US-A- 3 349 216
- US-A- 4 753 424

## Beschreibung

Die Erfindung betrifft ein Schweißaggregat zum Verschweißen von Schienen eines Gleises, mit einem ersten und einem zweiten, je mit einem Klemmantrieb verbundenen Aggregatkörper, die durch Verschiebezylinder entlang von parallel zu den Schienen verlaufenden Aggregatführungen zueinander bewegbar sind.

Derartige Schweißaggregate zum sogenannten mobilen Abbrennstumpfschweißen sind bereits aus einer Vielzahl von Veröffentlichungen in verschiedenen Ausführungen bekannt geworden, wie beispielsweise durch US 3,349,216 oder GB 2 185 703 A.

Ein weiteres Schweißaggregat ist durch EP 0 132 227 B1 bekannt, bei dem die beiden Aggregatkörper durch einen Kniehebel miteinander verbunden sind. Die Verschiebezylinder sind mit einem Querträger verbunden, an dem Klemmantriebe zum Erfassen der Schiene vorgesehen sind. Aus der US 4,753,424 ist ein schweißaggregat mit sämtlichen Merkmalen des Oberbegriffs des Anspruchs 1 bekannt.

Die Aufgabe der vorliegenden Erfindung liegt nun in der Schaffung eines Schweißaggregates der eingangs genannten Art, das bei konstruktiv einfacher Ausbildung besonders hohe, in Schienenlängsrichtung verlaufende Ziehkräfte auf die Schiene übertragen kann.

Diese Aufgabe wird erfindungsgemäß mit einem Schweißaggregat der gattungsgemäßen Art durch die im Kennzeichen von Anspruch 1 angeführten Merkmale gelöst.

Durch eine derartige Positionierung der Verschiebezylinder ist das Schweißaggregat mit minimaler Bauhöhe auszubilden. Dies ermöglicht eine vorkragende Aufhängung auf einem Schienenfahrzeug, ohne dadurch eine vorgeschriebene UIC-Sicht auf das Gleis einzuschränken. Außerdem ist es durch diese Ausbildung möglich, das Heranziehen der Schiene durch ein Ausfahren der Kolbenstange aus dem Verschiebezylinder zu bewerkstelligen. Damit ist die Kolbenfläche nicht durch die Kolbenstange reduziert und steht zur Gänze für den Druckaufbau zur Verfügung. Außerdem ist bei Aufrechterhaltung hoher Zugkräfte ein relativ geringer Durchmesser der Verschiebzylinder möglich. Daraus resultiert der Vorteil, dass die zu verschweißenden Schienenenden lediglich geringfügig von den Schwellen abzuheben sind und damit eine fluchtende Ausrichtung der Schienenenden erleichtert wird.

Weitere Vorteile der Erfindung ergeben sich aus den Unteransprüchen und der Zeichnungsbeschreibung.

Im Folgenden wird die Erfindung anhand eines in der Zeichnung dargestellten Ausführungsbeispieles näher beschrieben. Es zeigen:
Fig. 1 eine Schrägansicht eines Schweißaggregates, wobei der besseren Übersicht wegen lediglich die wichtigsten Bauteile dargestellt sind,
Fig. 2 und 3 eine Draufsicht bzw. eine Seitenansicht des in Fig. 1 ersichtlichen Schweißaggregates, und
Fig. 4 eine Ansicht eines Aggregatkörpers in Schienenlängsrichtung.

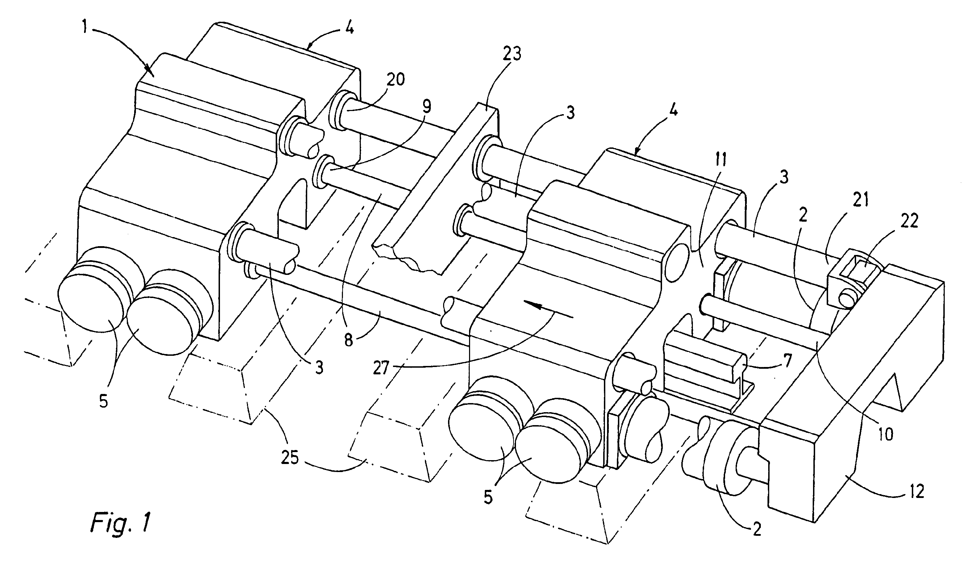

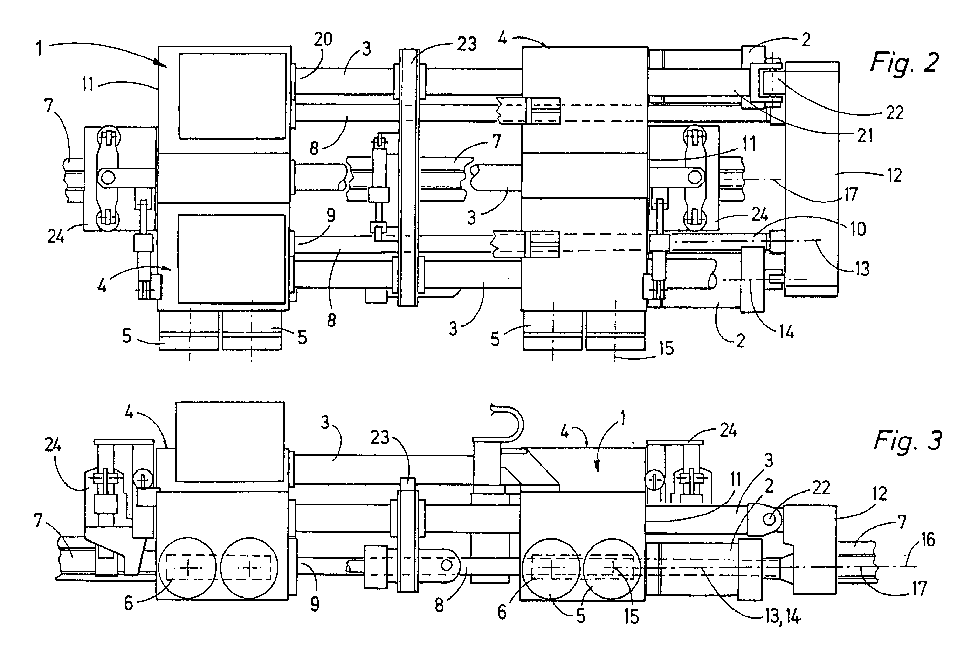

Ein in den Fig. 1 bis 3 dargestelltes Schweißaggregat 1 setzt sich aus zwei mit Hilfe von Verschiebezylindern 2 entlang von Aggregatführungen 3 zueinander verschiebbaren Aggregatkörpern 4 zusammen. Diese sind jeweils mit zwei Klemmantrieben 5 verbunden, mit denen Klemmbacken 6 an miteinander zu verschweißende Schienen 7 angepresst werden. Parallel zu den Aggregatführungen 3 verlaufende Zugstangen 8 sind mit einem ersten Ende 9 am ersten Aggregatkörper 4 befestigt und durch den zweiten Aggregatkörper 4 hindurchgeführt, wobei jeweils ein zweites Ende 10 - bezüglich einer normal zu den Aggregatführungen 3 verlaufenden Außenfläche 11 des zweiten Aggregatkörpers 4 - vorragend positioniert ist.

Die zweiten Enden 10 der beiden Zugstangen 8 sind mit einem Querträger 12 verbunden. Jeder Verschiebezylinder 2 ist einerseits an der genannten Außenfläche 11 des zweiten Aggregatkörpers 4 und andererseits am Querträger 12 befestigt.

Wie insbesondere in Fg. 3 ersichtlich, sind Längsachsen 13, 14, 15 der Zugstangen 8, der Verschiebezylinder 2 und der Klemmantriebe 5 in einer gemeinsamen Ebene 16 positioniert. Diese liegt in einer Neutralachse 17 der Schiene 7.

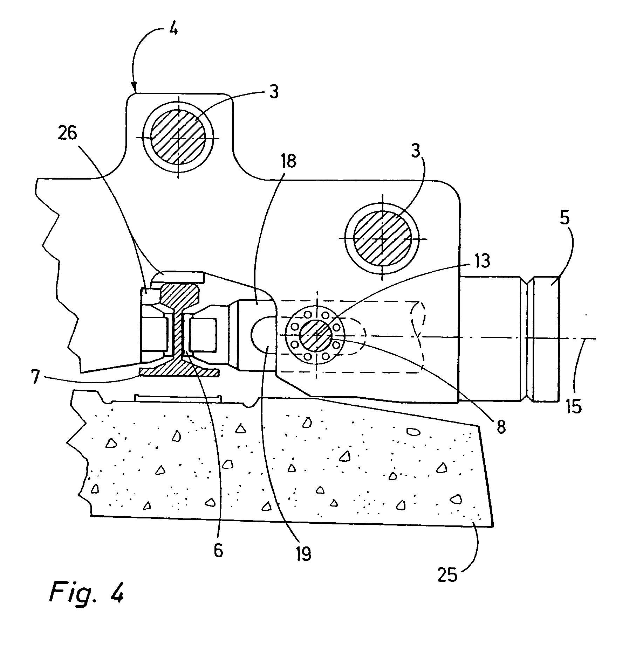

Wie in Fig. 4 dargestellt, sind die normal zur Längsachse 13 der Zugstangen 8 verlaufenden Klemmantriebe 5 im Bereich von Kolbenstangen 18 jeweils mit einer Ausnehmung 19 zur Durchführung der Zugstange 8 ausgestattet. Die an einem ersten Ende 20 mit dem ersten Aggregatkörper 4 verbundenen Aggregatführungen 3 sind mit einem zweiten Ende 21 jeweils durch eine Gelenkverbindung 22 mit dem Querträger 12 verbunden.

Zwischen den beiden Aggregatkörpern 4 ist eine Abschervorrichtung 23 zur Entfernung eines Schweißwulstes vorgesehen. An jeder Außenfläche 11 der beiden Aggregatkörper 4 ist eine Hebevorrichtung 24 zum Anheben der Schienen 7 befestigt.

Zur Vorbereitung des Schweißvorganges werden beide Schienen 7 durch die Hebevorrichtungen 24 von den darunter liegenden Schwellen 25 abgehoben (s. Fig. 4) und an Anschlagleisten 26 angepresst. Anschließend werden die Klemmantriebe 5 beaufschlagt, um die Klemmbacken 6 mit einer Klemmkraft von 350 t an einen Schienensteg der Schiene 7 anzupressen. Zusätzlich werden nicht näher dargestellte Elektroden an die Schienen 7 angepresst.

Zur Einleitung des Schweißvorganges wird der zweite Aggregatkörper 4 mitsamt der erfassten Schiene 7 durch Beaufschlagung der Verschiebeantriebe 2 mit einer Zugkraft von bis zu 150 t in einer Richtung 27 zur zweiten Schiene 7 bewegt. Sobald die für die Schweißung erforderliche Distanzierung der beiden Schienenenden erreicht ist, wird die Stromzufuhr eingeleitet.

Im Fall einer über der Neutraltemperatur liegenden Umgebungstemperatur ist es wahlweise auch möglich, die Schiene 7 - durch entsprechende Beaufschlagung der beiden Verschiebeantriebe 2 - in einer zur dargestellten Richtung 28 entgegen gesetzten Richtung zu bewegen.

## Patentansprüche

1. Schweißaggregat zum Verschweißen von Schienen (7) eines Gleises, mit einem ersten und einem zweiten, je mit einem je eine kolbenstange (18) aufweisenden, Klemmantrieb (5) verbundenen Aggregatkörper (4), die durch Verschiebezylinder (2) entlang von parallel zu den Schienen (7) verlaufenden Aggregatführungen (3) zueinander bewegbar sind, und einem mit den Aggregatführungen (3) und den Verschiebezylindern (2) verbundenen Querträger (12) sowie mit parallel zu den Aggregatführungen (3) verlaufenden und mit dem overträger (12) verbundenen zugstangen (8), **dadurch gekennzeichnet, dass** die Längsachsen (13, 14, 15) der Zugstangen (8), sowie der Verschiebezylinder (2) und der Klemmantriebe (5) in einer gemeinsamen Ebene (16) positioniert sind.

2. Schweißaggregat nach Anspruch 1, **dadurch gekennzeichnet, dass** die gemeinsame Ebene (16) in einer Neutralachse (17) der zu verschweißenden Schienen (7) positioniert ist.

3. Schweißaggregat nach Anspruch 1, **dadurch gekennzeichnet, dass** Längsachsen (15) der an jedem Aggregatkörper (4) angeordneten Klemmantriebe (5) in der gemeinsamen Ebene (16) und in einer normal zur Längsachse (13) der Zugstangen (8) verlaufenden Lage positioniert sind, wobei eine Kolbenstange (18) des Klemmantriebes (5) eine Ausnehmung (19) zur Durchführung der Zugstange (8) aufweist.

4. Schweißaggregat nach Anspruch 1, **dadurch gekennzeichnet, dass** jede Aggregatführung (3) durch eine Gelenkverbindung (22) mit dem Querträger (12) verbunden ist.

## Claims

1. A welding unit for welding rails (7) of a track, including a first and a second unit body (4), each connected to a clamping drive (5) having a respective piston rod (18), which are movable towards one another by means of displacement cylinders (2) along guides (3) extending parallel to the rails (7), and including a crossbeam (12) - connected to the guides (3) and the clamping cylinders (2) - as well as pull rods (8) extending parallel to the guides (3) and connected to the crossbeam (12), **characterized in that** the longitudinal axes (13, 14, 15) of the pull rods (8) and of the displacement cylinders (2) and clamping drives (5) are positioned in a common plane (16).

2. A welding unit according to claim 1, **characterized in that** the common plane (16) is positioned in a neutral axis (17) of the rails (7) to be welded.

3. A welding unit according to claim 1, **characterized in that** longitudinal axes (15) of the clamping drives (5) arranged on each unit body (4) are positioned in the common plane (16) and in a position extending perpendicularly to the longitudinal axis (13) of the pull rods (8), wherein a piston rod (18) of the clamping drive (5) has an opening (19) for passage of the pull rod (8).

4. A welding unit according to claim 1, **characterized in that** each guide (3) is connected to the crossbeam (12) by means of an articulated connection (22).

## Revendications

1. Module de soudage pour le soudage de rails (7) d'une voie ferrée, comprenant un premier et un second corps de module (4) relié chacun à un entraînement de serrage (5) présentant chacun une tige de piston (18), lesquels corps de module sont déplaçables l'un par rapport à l'autre par des cylindres de coulissement (2) le long de guides de module (3) s'étendant parallèlement aux rails (7), et comprenant une traverse (12) reliée aux guides de module (3) et aux cylindres de coulissement (2) ainsi que des tiges de piston (8) s'étendant parallèlement aux guides de module (3) et reliées à la traverse (12), **caractérisé en ce que** les axes longitudinaux (13, 14, 15) des tiges de piston (8) ainsi que des cylindres de coulissement (2) et des entraînements de serrage (5) sont positionnés dans un plan commun (16).

2. Module de soudage selon la revendication 1, **caractérisé en ce que** le plan commun (16) est positionné dans un axe neutre (17) des rails à souder (7).

3. Module de soudage selon la revendication 1, **caractérisé en ce que** des axes longitudinaux (15) des entraînements de serrage (15) disposés sur chaque corps de module (4) sont positionnés dans le plan commun (16) et dans une position s'étendant perpendiculairement à l'axe longitudinal (13) des tiges de piston (8), dans lequel une tige de piston (18) de l'entraînement de serrage (5) présente un évidement (19) pour le passage de la tige de piston (8).

4. Module de soudage selon la revendication 1, **caractérisé en ce que** chaque guide de module (3) est relié par une connexion articulée (22) à la traverse (12).
